# EUROPEAN PATENT APPLICATION

(11) **EP 1 521 159 A1**
(43) Date of publication of application: **06.04.2005**
(21) Application number: 04017344.5
(22) Date of filing: 22.07.2004
(51) Int. Cl.: G06F 1/00

(54) **Automatic protection apparatus for an unattended computer**

(30) Priority: 30.09.2003 DE 20315106 U
(71) Applicant: TOPSEED TECHNOLOGY CORP., Chung Ho City, Taipei Hsien, Taiwan 235 (TW)
(72) Inventor: Chen, Shoei-Lai, Taipei Taiwan 237 (TW)
(74) Representative: Urner, Peter, Dipl.-Phys.

(57) **Abstract**

An automatic protection apparatus for an unattended computer includes a transmitter and a receiver for wireless transmission. The receiver is plugged in an output port of the computer host to receive the wireless electromagnetic wave or optical wave signal transmitted from the transmitter, while the transmitter uses a specific low power to generate and transmit such wireless signal. Therefore, the receiver can receive the wireless signal within a short distance range. The transmitter is carried by a user. When the transmitter is remote from the receiver by a distance exceeding the distance range, the receiver is operative to generate a control signal to the computer automatically, so as to force the computer into a specific protection status (such as shutdown, standby, sleep mode or screen saver activation).

## Description

### BACKGROUND OF THE INVENTION

The present invention relates to an automatic protection apparatus for an unattended computer and, more particularly, to a wireless transmission apparatus which forces the computer into a protection status when a receiver thereof cannot detect a wireless signal transmitted from a transmitter.

Computers have become an inevitable tool in modem society. However, for frequent users of computers, particularly the working class, unpredictable event may drag the users away from the computers and leave the computer unattended for a long period of time. During such period of time, the content and information displayed on the screen of the computer is thus publicly accessed by anyone passing by. When the displayed content involves with confidentiality, loss and damage caused thereby will not be remediable. Although the operating system such as Window, Linux can automatically activate a screen saver program or enter a suspend status or sleep mode, such functions are designed for screen protection or power saving only. They are activated after several minutes or hours after the last operation of the computer. Therefore, such functions cannot respond immediately after the user is beyond the accessible range of the computer. It is thus unable to achieve the protection of the content and information as displayed by the unattended computer.

### BRIEF SUMMARY OF THE INVENTION

The present invention provides an automatic protection apparatus for a computer. When the user is remote from a computer by a distance exceeding the accessible range, the unattended computer will automatic enter a protection status which automatically erases the content displayed by the unattended computer. Thereby, the content is prevented from being stolen.

Wireless transmission technique is used to implement the automatic protection apparatus provided by the present invention. A low-power portable transmitter is used and carried by a user. The transmitter is operative to continuously generate a coded signal of wireless electromagnetic or optical wave at a specific frequency. A receiver is plugged in an output port of a computer. When the wireless signal was continuously received by the receiver, no action is taken by the receiver. However, when the transmitter is remote from the computer or the receiver by a distance beyond the accessible or receivable range, a control signal is generated by the receiver and output to the computer to shut down the computer, or to force the computer entering a standby, sleep or screen protection mode.

### BRIEF DESCRIPTION OF THE DRAWINGS

These, as well as other features of the present invention, will become apparent upon reference to the drawings wherein:
Figure 1 shows application of the automatic protection apparatus provided by the present invention to a laptop computer;
Figure 2 shows the circuit block diagram of the transmitter of the automatic protection apparatus; and
Figure 3 shows the circuit block diagram of the receiver of the automatic protection apparatus.

### DETAILED DESCRIPTION OF THE INVENTION

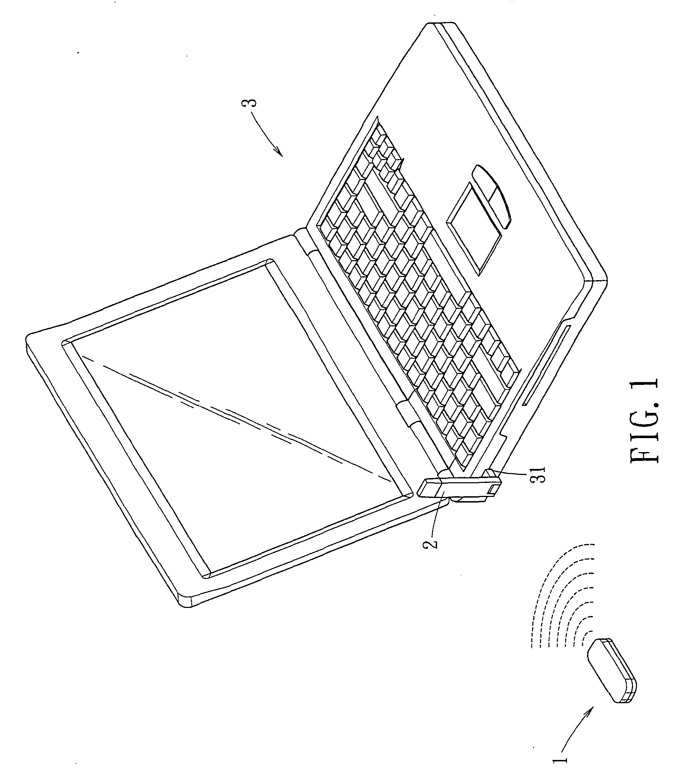

Referring to Figure 1, a schematic of an automatic protection apparatus for an unattended computer is illustrated. As shown, the automatic protection apparatus comprises a transmitter 1 and a receiver 2. The receiver 2 is plugged into an output port 31 of a computer 3. Such output port 31 may be replaced by other port such as a universal serial bus (USB) without exceeding the spirit or scope of the present invention. In addition, though Figure 1 shows the application of the automatic protection apparatus to a laptop computer, the application is not restricted thereby. Other types of computers, such as desktop and palm computers can also use such device.

The transmitter 1 is portable and carried by the user. The transmitter 1 is operative to generate a coded wireless signal of electromagnetic wave or optical wave at a specific frequency continuously. The transmission power is very low, and the coverage, that is, the effective range of the wireless signal is between about 2 meters and about 5 meters only. The effective range of the transmitter 1 is slightly longer than the accessible range between the user and the computer 3 for regular operation. The receiver 2 is operative to receive the wireless signal generated by the transmitter 1 within the effective range. When the user is operating the computer 3, the transmitter 1 carried by the user is thus within the effective range. As the receiver 2 receives the wireless signal continuously, no action is taken thereby. When the user and the transmitter carried thereby is remote from the computer by a distance exceeding the effective range, no wireless signal can be received by the receiver 2. The receiver 2 thus automatically generates a control signal to the computer 3. The control signal shuts down the computer 3 or commands the computer 3 enter a protection mode, such as a standby mode, a sleep mode or a screen protection mode. Therefore, the content is not displayed by the computer 3. To retrieve the content and display it on the screen, a password for the operating system has to be correctly entered. If the computer has prestored an execution program for locking the computer, the control signal of the receiver 2 is then operative to execute such program, such that the computer 3 is forced to enter a locking status.

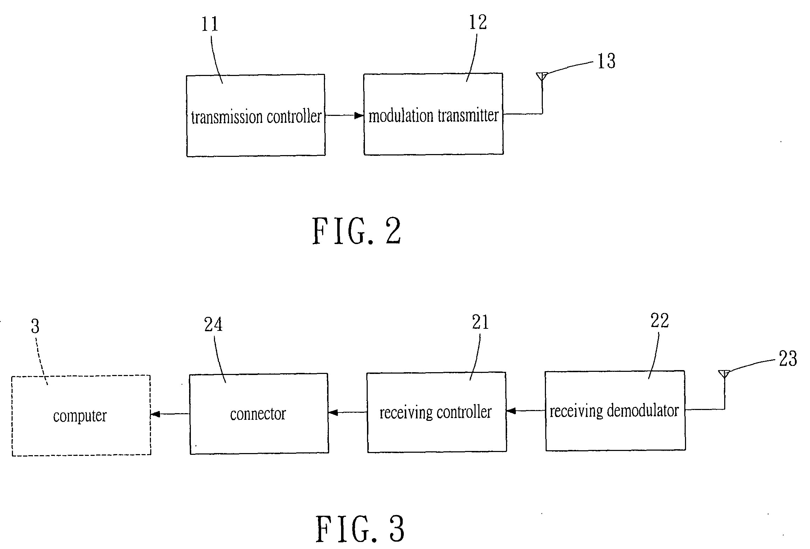

Figure 2 shows a circuit block diagram of a transmitter 1 which uses electric wave for signal transmission. The transmitter 1 includes a transmission controller 11, a modulation transmitter 12 and a transmission antenna 13. The transmission controller 11 is operative to generate a specific encoded signal. The encoded signal is modulated by a carrier with a specific frequency by the modulator transmitter 12 and output by the transmission antenna 13. Figure 3 shows a circuit block diagram of the receiver 2. The receiver 2 comprises a receiving controller 21, a receiving demodulator 22, a receiving antenna 23 and a connector 24. The receiving antenna 23 is used to receive the electric wave output from the transmitter 1. The received electric wave is then demodulated by the receiving demodulator 22 and discriminated by the receiving controller. If the received and demodulated electric wave is discriminated as the electric wave transmitted by the transmitter 1, no action is taken. If the electric wave is not received within a specific period of time, a control signal is generated by the receiving controller 21 and transmitted to the computer 3 via the connector 24 plugged in the output port 31 of the computer 3. The protection status of the computer 3 is thus activated. The wireless transmission between the transmitter 1 and the receiver 2 can also be implemented by infrared wave. The circuit design for the infrared transmission is similar to the above, except that the transmission antenna 13 has to be replaced by an infrared light emitting diode (IR LED), and the receiving antenna 23 has to be replaced by a photodiode.

Therefore, the present invention allows the computer to enter a protection status immediately after the user is remote from the computer by a distance exceeding an accessible range of the computer to provide protection of the confidential content displayed or retrieved thereby.

This disclosure provides exemplary embodiments of the present invention. The scope of this disclosure is not limited by these exemplary embodiments. Numerous variations, whether explicitly provided for by the specification or implied by the specification, such as variations in shape, structure, dimension, type of material or manufacturing process may be implemented by one of skill in the art in view of this disclosure.

## Claims

1. An automatic protection apparatus for an unattended computer, comprising:
a portable transmitter operative to generate a wireless signal of electric or optical wave; and
a receiver plugged in an output port of the computer, operative to receive the wireless signal within a predetermined range and generate a control signal to force the computer into a protection mode when no wireless signal from the transmitter can be received thereby.

2. The apparatus according to Claim 1, wherein the protection mode includes change the display status of the computer.

3. The apparatus according to Claim 1, wherein the protection mode includes shutdown, standby, sleep or screen protection mode.

4. The apparatus according to Claim 1, wherein the transmitter comprises:
a transmission controller, operative to generate a coded signal of electric wave;
a transmission modulator, operative to modulate the coded signal by a carrier at a specific frequency; and
a transmission antenna, operative to output the coded signal modulated by the transmission modulator, and the receiver comprises:
a receiving antenna, operative to receive the coded signal output by the transmission antenna within the predetermined range;
a receiving demodulator, operative to demodulate the coded signal received by the receiving antenna;
a receiving controller, operative to discriminate whether the demodulated received coded signal is generated by the transmitter, and generate a control signal to force the computer entering the protection mode when the receiving antenna does not receive the coded signal output by the transmission antenna; and
a connector, plugged in the output port of the computer to transmit the control signal to the computer.

5. The apparatus according to Claim 1, wherein the transmitter comprises:
a transmission controller, operative to generate an infrared coded signal;
a transmission modulator, operative to modulate the coded signal by a carrier at a specific frequency; and
an infrared light emitting diode, operative to output the coded signal modulated by the transmission modulator; and the receiver comprises:
a photodiode, operative to receive the coded signal output by the transmission antenna within the predetermined range;
a receiving demodulator, operative to demodulate the coded signal received by the receiving antenna;
a receiving controller, operative to discriminate whether the demodulated received coded signal is generated by the transmitter, and generate a control signal to force the computer entering the protection mode when the receiving antenna does not receive the coded signal output by the transmission antenna; and
a connector, plugged in the output port of the computer to transmit the control signal to the computer.
